(19) Europäisches Patentamt
European Patent Office
Office européen des brevets

(11) **EP 4 206 790 B1**

(12) **EUROPEAN PATENT SPECIFICATION**

(45) Date of publication and mention
of the grant of the patent:
**03.09.2025 Bulletin 2025/36**

(21) Application number: **22214267.1**

(22) Date of filing: **16.12.2022**

(51) International Patent Classification (IPC):
**G02B 27/01** *(2006.01)* **G02B 1/00** *(2006.01)*
**G02B 27/10** *(2006.01)*

(52) Cooperative Patent Classification (CPC):
**G02B 27/0101; G02B 1/005; G02B 27/102;**
**G02B 27/1086;** G02B 2027/012

(54) **OPTICAL DEVICES WITH ZONE FOLDED METASURFACES**

OPTISCHE VORRICHTUNGEN MIT ZONENGEFALTETEN METAOBERFLÄCHEN

DISPOSITIFS OPTIQUES À MÉTASURFACES PLIÉES EN ZONE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.12.2021 US 202163266261 P**

(43) Date of publication of application:
**05.07.2023 Bulletin 2023/27**

(73) Proprietor: **3M Innovative Properties Company
Saint Paul, Minnesota 55133-3427 (US)**

(72) Inventors:
• **OVERVIG, Adam**
**Bronx, 10470 (US)**
• **COTRUFO, Michele**
**New York, 10030 (US)**
• **ALU, Andrea**
**Tenafly, 07670 (US)**
• **HAO, Bing**
**St. Paul, 55133-3427 (US)**
• **SCHARDT, Craig R.**
**St. Paul, 55133-3427 (US)**

• **GUO, Xuexue**
**St. Paul, 55119 (US)**
• **STENSVAD, Karl K.**
**St. Paul, 55133-3427 (US)**

(74) Representative: **Mathys & Squire**
**Theatinerstraße 7**
**80333 München (DE)**

(56) References cited:
**WO-A1-2021/036525 US-B2- 7 123 418**

• **MAXIM V GORKUNOV ET AL: "Metasurfaces with
maximum chirality empowered by bound states
in the continuum", ARXIV.ORG, CORNELL
UNIVERSITY LIBRARY, 201 OLIN LIBRARY
CORNELL UNIVERSITY ITHACA, NY 14853, 29
June 2020 (2020-06-29), XP081709929**
• **HOU-TONG CHEN ET AL: "A review of
metasurfaces: physics and applications",
REPORTS ON PROGRESS IN PHYSICS, vol. 79,
no. 7, 16 June 2016 (2016-06-16), GB, pages
076401, XP055747717, ISSN: 0034-4885, DOI:
10.1088/0034-4885/79/7/076401**

EP 4 206 790 B1

## Description

## BACKGROUND

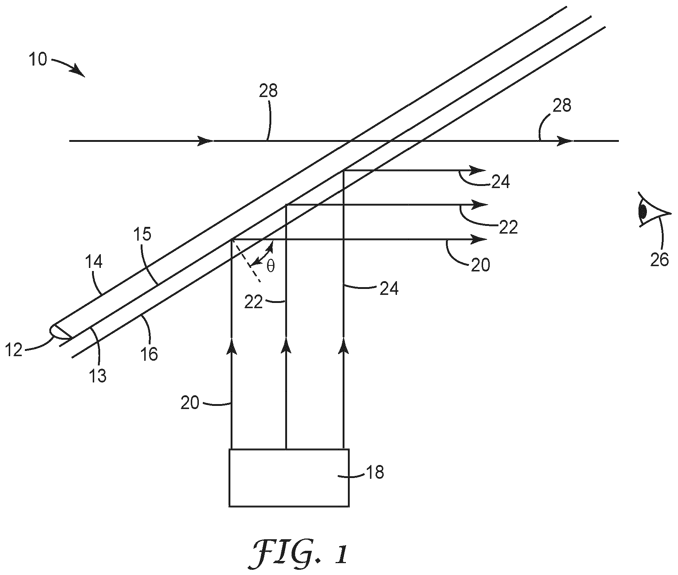

Automotive heads-up displays (HUD) provide real-time information to drivers in a convenient and safe way. Referring to the schematic diagram in FIG. 1, a HUD system 10 for a vehicle includes an optical combiner 12 between an exterior windshield glass layer 14 and an interior windshield glass layer 16. A projector 18, which includes a light source such as a laser or a LED, emits polarized narrow band red light 20, green light 22, and blue light 24, which are incident on a first surface 13 of the optical combiner 12 at a selected oblique incident elevation angle θ. The first surface 13 of the optical combiner 12 specularly reflects the red/green/blue (RGB) light toward an eye 26 of an observer (vehicle driver) to create a desired virtual image. While being highly reflective to the narrow band polarized RGB light 20, 22, 24 at the elevation angle θ, the combiner 12 should also be highly transmissive to unpolarized broad band ambient light 28 incident on the second surface 15 thereof to provide high transparency to an external view through the windshield by the observer 26.

The combiner 12 should be highly transmissive to light coming through the windshield, except within a small but finite angle at three selective wavelengths near the red, green and blue wavelengths emitted by the projector. Low-cost and mass producible materials for HUD display combiners are needed that can provide both narrow band reflection for polarized input signals at oblique incident elevation angles, and high transmission of unpolarized ambient light. WO2021036525A1 discloses an optical combiner for a head-mounted display device, wherein the optical combiner is based on a metasurface which is optimised in terms of its angular and spectral response.

## SUMMARY

Traditional diffraction gratings are angle dependent, meaning that as the incident angle of an input signal changes, a resonant wavelength of the output signal also changes. To reduce the angular variation for a reflection resonance from a diffraction grating, the spectral line width of the resonance can be controlled, resulting in a wider wavelength band with broader peaks. In some examples, this poor angular tolerance can lower the broadband transmission of the diffraction grating, and alter the hue of the output signal.

In one aspect, the present disclosure is directed to optical devices using perturbed arrangements of periodic structures to flatten the angular response of the resonant effect, while simultaneously providing narrow-wavelength reflective resonances. In some examples, the perturbed structures can produce a flat band output signal at a desired incident angle with narrower reflection bands compared to a conventional diffraction grating.

In some examples, the optical device included an optical combiner with a first structured layer of a material with a first refractive index. The first structured layer includes a structured surface with a periodic two-dimensional arrangement of structures such as, for example, an array of depressions. A second layer of a material with a second refractive index overlies the structured surface and occupies at least a substantial portion of the volume of each of the structures. The difference between the first refractive index and the second refractive index, measured at 587.5 nm, is less than about 1.5. For polarized or unpolarized light incident on the structured surface at an oblique elevation angle greater than about 20° (± 1°), the optical combiner can provide an output signal with one or more distinct narrowband reflection peaks each having an average reflection of greater than about 50%, and the average reflection peaks in the output signal can be provided within a range of ± 10°, or ± 5°, or ± 3° of the elevation angle.

The optical combiners of the present disclosure utilize inexpensive and widely available materials, and can be manufactured on a larger scale at relatively low costs using, for example, a roll-to-roll manufacturing process.

In one aspect, the present disclosure is directed to an optical combiner that includes a first layer with a periodic two-dimensional arrangement of structures arranged to support resonance for an input signal of a target wavelength, wherein the structures have a first refractive index. A second layer overlies the structures on the first layer, wherein the second layer includes a second material with a second refractive index, and wherein a difference between the first refractive index and the second refractive index, measured at 587.5 nm, is less than about 1.5. The periodic arrangement of structures is configured such that the optical combiner produces, for the input signal incident on the first layer from air at an oblique elevation angle of greater than about 20°, an output signal with a reflection peak with an average reflection of greater than about 50% within a ± 5° range of the elevation angle.

In another aspect, the present disclosure is directed to a windshield for a vehicle, which includes an exterior glass layer, an interior glass layer, and an optical combiner film between the exterior glass layer and the interior glass layer. The optical combiner film includes first layer with a periodic two-dimensional arrangement of structures arranged to support resonance for an input signal of a target wavelength, wherein the structures have a first refractive index; and a second layer that overlies the structures on the first layer, wherein the second layer includes a second material with a second refractive index, and wherein a difference between the first refractive index and the second refractive index, measured at 587.5 nm, is less than about 1.5. The periodic arrangement of structures is configured such that the optical combiner produces, for the input signal incident on the first layer from air at an oblique elevation angle of greater than about 20°, an output signal with a reflection peak with an average reflection of greater than about 50% within a ± 5° range of the elevation angle.

In another aspect, the present disclosure is directed to a heads-up display (HUD) system, which includes a computer with a processor that generates an output including HUD display data, and a projector unit interfaced with the computer, wherein the projector unit includes a laser that emits narrow band red/green/blue (RGB) input signal onto a windshield for display by a viewer. The windshield includes an exterior glass layer, an interior glass layer, and an optical combiner film between the exterior glass layer and the interior glass layer. The optical combiner film includes a first layer with a periodic two-dimensional arrangement of structures arranged to support resonance for an input signal of a target wavelength, wherein the structures have a first refractive index; and a second layer that overlies the structures on the first layer, wherein the second layer includes a second material with a second refractive index, and wherein a difference between the first refractive index and the second refractive index, measured at 587.5 nm, is less than about 1.5. The periodic arrangement of structures is configured such that the optical combiner produces, for the RGB input signal incident on the first layer from air at an oblique elevation angle of greater than about 20°, an output signal having a reflection peak with an average reflection of greater than about 50% within a ± 5° range of the elevation angle.

In another aspect, the present disclosure is directed to an optical combiner film that includes a structured layer overlain by a cover layer. The structured layer includes a periodic lattice of regularly repeating depressions, wherein the lattice of depressions has a perturbed hexagonal unit cell, and wherein a difference between a refractive index of the structures and a refractive index of the cover layer, measured at 587.5 nm, is less than about 1.5. The periodic lattice is configured such that the optical combiner film produces, for an input signal incident on the structured layer from air at an oblique elevation angle of greater than about 20°, an output signal having a reflection peak with an average reflection of greater than about 50% within a ± 5° range of the elevation angle.

In another aspect, the present disclosure is directed to a method for making an optical combiner film. The method includes forming a first layer on a polymeric support film, wherein the first layer includes a periodic arrangement of depressions and having a perturbed hexagonal unit cell arrangement, and wherein the first layer includes a material with a first refractive index; and applying a cover layer on the first layer, wherein the cover layer includes a material with a second refractive index, and wherein a difference between the first refractive index and the second refractive index, measured at 587.5 nm, is less than about 1.5. The structures in the first layer are configured such that the optical combiner film produces, for an input signal incident on the first layer from air at an oblique elevation angle of greater than about 20°, an output signal having a reflection peak with an average reflection of greater than about 50% within a ± 5° range of the elevation angle.

In another aspect, the present disclosure is directed to an optical combiner, including: a first structured layer of a first material with a first refractive index, wherein the first structured layer includes a first periodic two-dimensional arrangement of structures arranged to support resonance for an input signal of a first target wavelength and a second target wavelength; and a second structured layer of a second material with second refractive index, wherein the second structured layer includes a second periodic two-dimensional arrangement of structures arranged to support resonance for an input signal of a third target wavelength different from the first and the second target wavelengths, wherein the first structured layer and the second structured layer are stacked on each other such that light incident on the first structured layer is diffracted, in succession, by the first structured layer and the second structured layer. The first structured layer and the second structured layer are encapsulated in a third material with a third refractive index such that a refractive index difference, measured at 587.5 nm, between each of the first and the second refractive indices and the third refractive index is less than about 1.5. The structures in the first and the second structured layers are configured such that the optical combiner produces, for an input signal incident on first periodic arrangement of structures from air at an oblique elevation angle of greater than about 20°, an output signal having three reflection peaks with an average reflection of greater than about 50% within a ± 5° range of the elevation angle.

The details of one or more embodiments of the invention are set forth in the accompanying drawings and the description below. Other features, objects, and advantages of the invention will be apparent from the description and drawings, and from the claims.

## BRIEF DESCRIPTION OF DRAWINGS

FIG. 1 is schematic cross-sectional view of an heads up display (HUD) for use in a vehicle.
FIG. 2 is a series of plots showing a conventional approach of broadening the reflection peaks to enable a diffraction grating to function over a wider range of angles.
FIG. 3 is a series of plots showing the approach of the present disclosure to improving angular tolerance of a periodic structure by providing a flat refection band at a selected oblique angle.
FIGS. 4A-B include a schematic diagram and a reflectance plot showing an idealized optical combiner suitable for use in devices such as HUD and AR. The spectral requirements of these devices are broadband transmission and sharp resonant reflection.

FIGS. 4C-4D include a schematic diagram and a reflectance plot showing that in HUD and AR applications the angular response of the optical combiner should be sufficiently tolerant so that the resonant dispersion is smaller than the linewidth over the field of view (FoV) $\Delta\theta$ .

FIG. 5 shows zone-folding flat quasi-bound states in the continuum (QBIC) bands to symmetry-protected momenta. FIG. 5A shows the real space geometry of the target structure, composed of a slab of refractive index $n_H$ etched and filled with a material of lower refractive index $n_L$ . The lattice has hexagonal symmetry (for the choice $a_y = \sqrt{3}a_x$ ) when the perturbation takes the value $\delta = 0$, and rectangular symmetry otherwise.

FIG. 5B is the reciprocal lattice of the device in FIG. 5A, depicting how distinct regions of the unperturbed FBZ fold into the FBZ upon perturbation. Unprimed points refer to high symmetry points in the unperturbed lattice, while primed points refer to points in the perturbed lattice.

FIG. 5C is an example band diagram showing TE modes (characterized by $H_z$) for a slab of infinite thickness, showing a flat band positioned where the $K$ points fold between the $\Gamma$ and $M'_x$ points. The red dotted line shows the light line for light incident at $\theta_{op}$ . The lightly shaded region corresponds to bound modes (under the light line), while the white and dark shaded regions correspond to the radiation continuum with one and more than one diffraction modes supported respectively.

FIG. 5D shows control over where the K point modes fold is possible by varying the ratio $a_y/a_x$. FIGS. 5C-D are calculated using the 2D plane wave expansion method, where the effect of the out-of-plane dimension is approximated by using an effective refractive index of $n = 2.2$ .

FIG. 6A is schematic diagram of the metasurface and excitation geometry of the optical combiner of Example 1, with the thickness of the $TiO_2$ layer = 120 nm.

FIG. 6B shows the design of the optical combiner of Example 1, with $a_x$ = 231 nm, $a_y$ = 386 nm, D = 143 nm, and $\delta$ = 66 nm.

FIG. 6C is a SEM photograph of an overhead perspective view of the fabricated metasurface of FIG. 6B, without the capping polymer layer (120 in FIG. 6A). The scale bar is 300 nm.

FIGS. 6D-E are plots of simulated color-coded transmission spectra of the grating versus elevation angle $\theta$ and wavelength for p-polarized and s-polarized incident polarization, and FIGS. 6F-G are experimentally measured versions of FIGS. 6D-E.

FIG. 6H is a plot of the experimentally measured p-polarized transmission spectra of the metasurface of Example 1 at three selected angles.

FIG. 6I is a plot of the experimentally measured unpolarized averaged transmission versus elevation angle $\theta$, obtained by the spectral average of the maps in panels 6D-E.

FIG. 6J is a plot of the experimentally measured reflection and transmission spectra of the metasurface of Example 1 vs. wavelength at the elevation angle $\theta = 58°$.

FIG. 7A is a diagram of the real space lattice of the optical combiner of Example 2, featuring four rectangular apertures of dimension $45 \times 110 nm$ rotated at angles $\alpha_1$, $\alpha_1 + 90°$, $\alpha_2$, $\alpha_2 + 90°$ . The slab had height $H$ =180nm and the lattice constants were $a_x$ = 240nm and $a_y$ = 277nm.

FIG. 7B is a reciprocal lattice view of the zone folding to an off-normal quasi-momentum $k_c$ for the device of Example 2.

FIGS. 7C-D are calculated plots of reflectance in the blue region for right circular polarized (RCP) and left circular polarized (LCP) light, respectively, for a device with $\alpha_1$ = 45° and $\alpha_2$ = 0° .

FIG. 8A is a schematic diagram of an embodiment of an optical combiner of the present disclosure including cascaded structured surfaces, each structured surface including a perturbed two-dimensional arrangement of depressions.

FIG. 8B is a plot of $0^{th}$ order reflectance at oblique incident angles for one of the structured surfaces in the cascaded configuration of FIG. 8A, wherein the arrangement of depressions is configured to provide an output signal with two resonance peaks.

FIG. 8C is a plot of $0^{th}$ order reflectance at oblique incident angles for one of the structured surfaces in the cascaded arrangement of FIG. 8A, wherein the arrangement of depressions is configured to provide an output signal with a single resonance peak.

FIG. 8D is a plot of $0^{th}$ order reflectance for TM polarized light incident at oblique incident angles on the combined cascaded structures of the optical combiner of FIG. 8A.

FIG. 8E is a plot of $0^{th}$ order reflectance of the optical combiner of FIG. 8A.

FIG. 8F is a plot of $0^{th}$ order transmission of the optical combiner of FIG. 8A.

FIG. 9A is a schematic diagram of an embodiment of a process for making the metasurfaces of the present disclosure, which include a perturbed periodic arrangement of depressions.

FIG. 9B is a schematic diagram of an embodiment of a process for making the metasurfaces of the present disclosure, which include a perturbed periodic arrangement of depressions.

FIG. 10 is schematic cross-sectional view of an optical combiner film, which may be laminated between glass sheets to form a windshield constructions for a vehicle or an aircraft.

FIGS. 11A-B are schematic diagrams of experimental setups used in Example 1 for measuring transmission (FIG. 11A) and reflection (FIG. 11B). In FIGS. 11A-B, F1, F2 are lenses with a focal length f = 10 cm, LP represents a linear polarizer, BS1, BS2 are beam splitters and CCD is a camera.

Like symbols in the drawings indicate like elements.

## DETAILED DESCRIPTION

Referring again to FIG. 1, if the input signal incident on the optical combiner 12 includes a discrete set of narrow frequency channels (e.g., the three wavelengths $\lambda_{red} \pm \Delta\lambda$, $\lambda_{green} \pm \Delta\lambda$, and $\lambda_{blue} \pm \Delta\lambda$ with narrow linewidths $\Delta\lambda \ll \lambda$), the response of the beam splitter can be engineered to be spectrally selective so that $\eta_{art}(\lambda_{red,green,blue}) \approx 1$, but 0 at all other wavelengths. In this way, the overall efficiency of external information may also be approximately unity, $\overline{\eta}_{ext} = \int d\lambda \eta_{ext}(\lambda) \approx 1$. For example, guided mode resonance (GMR) filters can be configured to produce robust command over the bandwidth $\Delta\lambda$ of the resonances via the depth of corrugation (deeper corrugations increase $\Delta\lambda$). However, in conventional GMR filters, the dispersion $\omega_{res}(k)$ of the guided modes confers strong angular selectivity in addition to the spectral selectivity, so that for a certain frequency $\omega$ the reflectance satisfies $R(\omega,k) \approx 1$ only at the single wavevector $k$ that satisfies $\omega = \omega_{res}(k)$.

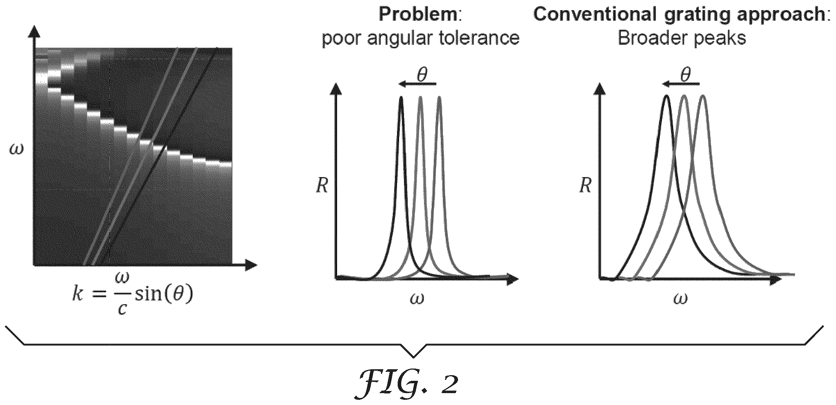

Referring to FIG. 2, for non-normal angles of incidence, the dispersion of a conventional diffraction grating has the approximate form $\omega_{res}(k) = \omega_0 + v_g k$, where $\omega_0$ is the resonant frequency at normal incidence and $v_g \approx c / n_{eff}$ is the group velocity of the guided mode ( $c$ is the speed of light in vacuum and $n_{eff}$ is the effective index of the guided mode, of order unity). Hence, for a resonant linewidth $\Delta\omega = \omega_0 / Q$ (where $Q$ is the Q-factor, characterizing the spectral selectivity), the angular tolerance (defined herein as the width of the angular range where reflection is at least 50% of the max reflection) of a GMR is $\Delta\theta \approx n_{eff} / Q$.

In a conventional diffraction grating structure such as a GMR filter one needs a broad spectral bandwidth to have a large field of view (FoV), in direct conflict with the narrow bandwidths desired for high $\eta_{ext}$. Alternatively, the FoV could be extended by aperiodic patterning such that the resonant frequency shifts spatially to counteract the angular dependence. However, both for manufacturing practicality and installation tolerances, periodic structures are highly preferable for compatibility with scalable approaches such as roll-to-roll manufacturing and nano-imprint lithography.

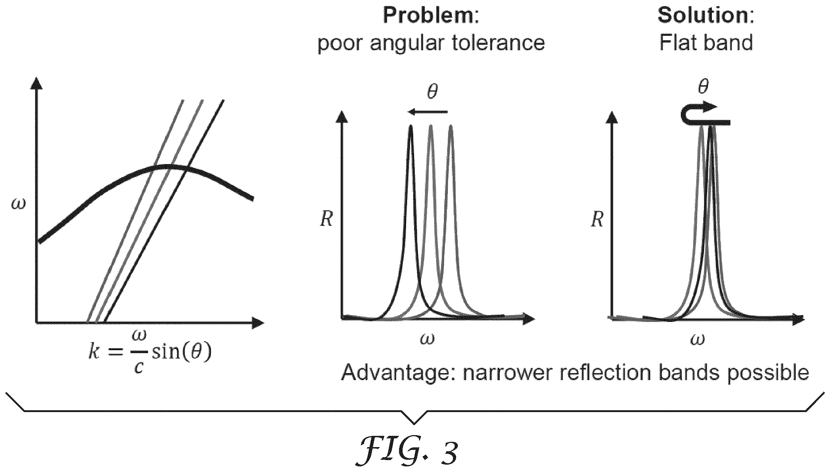

Referring now to FIG. 3, the optical combiners of the present disclosure utilize a first structured layer with a periodic two-dimensional arrangement of structures arranged to support resonance for an input signal of a target wavelength. The first structured layer is overlain by a second layer, and the difference between the refractive indices of the first and the second layers is less than about 1.5, as measured at 587.5 nm. The periodic arrangement of structures is configured such that the optical combiner produces, for the input signal incident on the first layer from air at an oblique angle of greater than about 20°, an output signal with a reflection peak with an average reflection of greater than about 50% within a $\pm$ 10° range of the target wavelength. In this application, average reflection measurements do not include Fresnel reflections from adjoining surfaces or layers such as, for example, layers of glass.

In some examples, the structures in the first layer are quasi-bound states in the continuum (QBIC) structures, which produce resonances that can be precisely controlled through a symmetry-lowering perturbation instead of the depth of corrugation utilized in GMR devices. In addition to the symmetry-controlled Q-factor (following $Q \propto 1 / \delta^2$ for a magnitude of perturbation $\delta$), QBICs have symmetry-controlled polarization dependence capable of reflecting any desired polarization, and the polarization control of flat optical filters even extends to manipulation of circularly polarized states. In some examples, QBICs are also compatible with high index contrast systems, in which case large in-plane Bragg scattering may produce flat band structures with increased angular tolerance (reduced angular selectivity).

In particular, QBICs are often well-approximated by having parabolic band structures, following a second order Taylor expansion $\omega_{res}(k) \approx \omega_0 + b(k - k_c)^2 / 2$, where $k_c$ is the momentum at which the first derivative vanishes and $b$ is the Taylor expansion coefficient with units $m^2 / s$. In this case, when operating near $\theta_{op} = \sin^{-1}(k_c c / \omega_0)$ the angular tolerance of the resonant reflectance has the form $\Delta\theta \approx \sqrt{2c^2 / b\omega_0 Q}$. Hence not only does the angular tolerance scale much more favorably with Q-factor ($Q^{-1/2}$ instead of $Q^{-1}$), the parameter $b$ offers an independent degree of freedom governing the trade-off between angular and spectral selectivity, and can vary over several orders of magnitude (in contrast to $n_{eff}$).

Unfortunately, by symmetry the momenta $k_c$ at which the first derivative vanishes (usually corresponding to the band edge mode) are conventionally limited to normal incidence, $k_c = 0$, or at the edge of the first Brillouin zone (FBZ), $k_c = \pm\pi / a$ (where $a$ is the lattice constant). The former would require operating at normal incidence, which is prohibitive for an optical combiner, and the latter exist either under the light line (in which case the modes are bound and cannot resonantly reflect light) or over the diffraction line (in which case parasitic diffraction orders will greatly reduce $\eta_{art}$ and potentially introduce unwanted diffractive rainbow effects distorting the external information). 'Accidental' mode mixing between two unrelated q-BICs can open up band gaps at arbitrary $k_c$, but (i) the resulting bands does not rely on Bragg scattering but on the strength of mode-coupling, and hence $b$ may not be arbitrarily small, (ii) the phenomenon relies on 'accidental' alignment between two modes, reducing the robustness from both a design and practical (fabrication) point of view, (iii) it inherently requires the presence of an additional resonance, thus reducing $\overline{\eta}_{ext}$, and (iv) it increases the complexity of the control over the linewidth and polarization properties of the QBICs. In contrast, a solution controlling $k_c$ directly from symmetry considerations would solve these limitations, simultaneously bringing to bear the advantages of spectrally isolated QBICs in terms of both lifetime and polarization control.

The optical combiners of the present disclosure utilize a zone-folding method based on lattice perturbations, which offers robust control over the Q-factor, polarization state, and operating angle of the band edge mode. In the arrangement of structures in the structured layer of the present disclosure, a non-rectangular lattice is transformed into a rectangular lattice, and Bragg-localized modes at the edge of the FBZ are folded to a non-zero momentum within the FBZ whose value is fixed by the discrete translation symmetry of the lattice. By stretching or compressing the lattice in a direction orthogonal to the plane of incidence, the momentum may be tuned, and thus the angle of incidence, of this band edge mode.

Since the angle of incidence breaks the inversion symmetry of the system compared to normal incidence excitation, the band-edge QBICs are compatible with extrinsic chirality, and thus offer selectability of the resonant polarization state to be any elliptical polarization (including full circular dichroism). Since zone-folded QBICs are periodic, subwavelength in dimension, and have broadband transmissive behavior, these structures offer a scalable platform for projective optical combiners and other AR displays with minimal compromises regarding fidelity of the external information and the efficiency and FoV of the input signal.

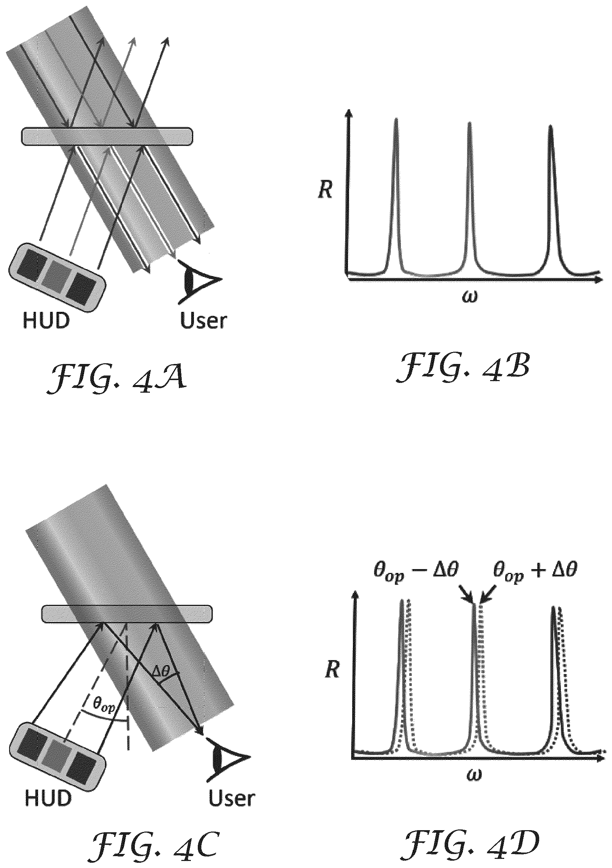

As shown in the schematic diagram of FIG. 4A, when used in an optical combiner component of an optical device such as, for example, a heads-up display (HUD) system, the structured surfaces of the present disclosure, or set of cascaded metasurfaces, specularly reflect up to three selected wavelengths (for example, red, green, and blue). In some examples, in a HUD the structured surfaces reject external information (represented by broadband light) only in these bands while overlaying the information projected by projector in HUD, the confluence of which arrives at the user. FIG. 4B shows a characteristic reflection spectrum at the operating angle $\theta_{op}$ for the selected wavelengths.

FIG. 4C schematically depicts the angular response of an optical combiner utilizing the structured surfaces of the present disclosure, in an example system wherein the information by the HUD is viewed by the user centered at an elevation angle $\theta_{op}$ but having extremal values subtended by the angle $\Delta\theta$. The performance of the optical combiner utilizing the structures of the present disclosure for the full FoV of the HUD image is correspondingly depicted in FIG. 4D, wherein the spectral shift of the resonant peaks is smaller than their linewidths, maintaining enhanced reflectance over all of the angles of operation. Not depicted in FIG. 4D is the same requirement in the orthogonal direction.

In some examples, to avoid double images coming from direct reflection off the air-glass interfaces, the external interfaces of the HUD system should have an anti-reflection coating. In some examples, the operating elevation angle $\theta_{op}$ should be at or near Brewster's angle (approximately 58°), requiring p-polarized light to be sent by the HUD and resonantly reflected by the metasurface.

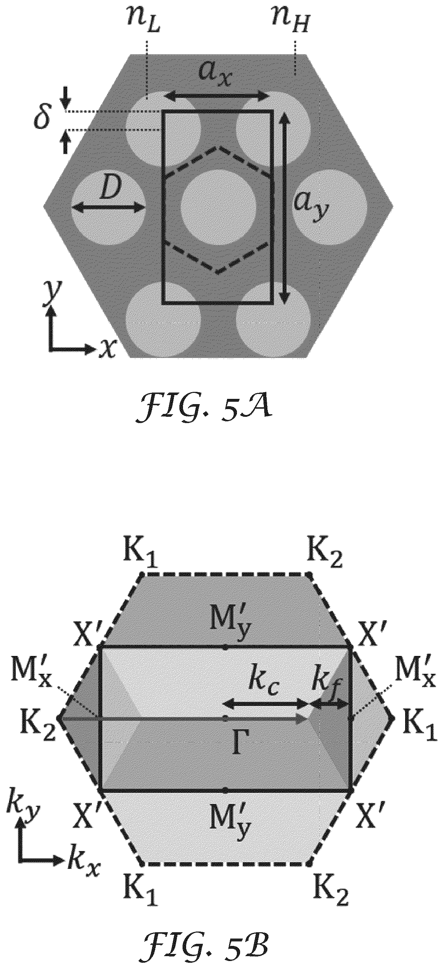

FIG. 5A illustrates an example of how a perturbation applied to a hexagonal photonic crystal can yield a rectangular lattice. The dashed hexagon in FG. 5A represents the unit cell of the unperturbed lattice, while the solid rectangle represents the unit cell of the perturbed structure. The example perturbation shown in FIG. 5A, which is not intended to be limiting, shifts every other row of the lattice vertically by a distance $\delta$, and perturbed structures arranged in this type of array can be used to excite a targeted TE (transverse electric), or s-polarized lattice of structures with TM (transverse magnetic) (p-polarized) light. In this application, TE polarized light is characterized by its electric field being perpendicular to the plane of incidence. For TE polarized light, the magnetic field - always perpendicular to the electric field in isotropic materials - thus lies in the plane of incidence.

The result of the perturbation in reciprocal space is depicted in FIG. 5B, where the zones of the unperturbed FBZ (dashed hexagon) are folded into the perturbed FBZ (solid rectangle) by translation of reciprocal lattice vector of the perturbed structure. In FIG. 5B, the modes at the $K$ points in the unperturbed FBZ (where Bragg scattering is maximal in a hexagonal lattice) have folded to a point $k_c$ away from the $\Gamma$ point and $k_f$ away from the edge of the perturbed FBZ. In the present application, k-points refer to sampling points in the FBZ of the material, i.e. the specific region of reciprocal-space which is closest to the origin (0,0,0) (the $\Gamma$ point).

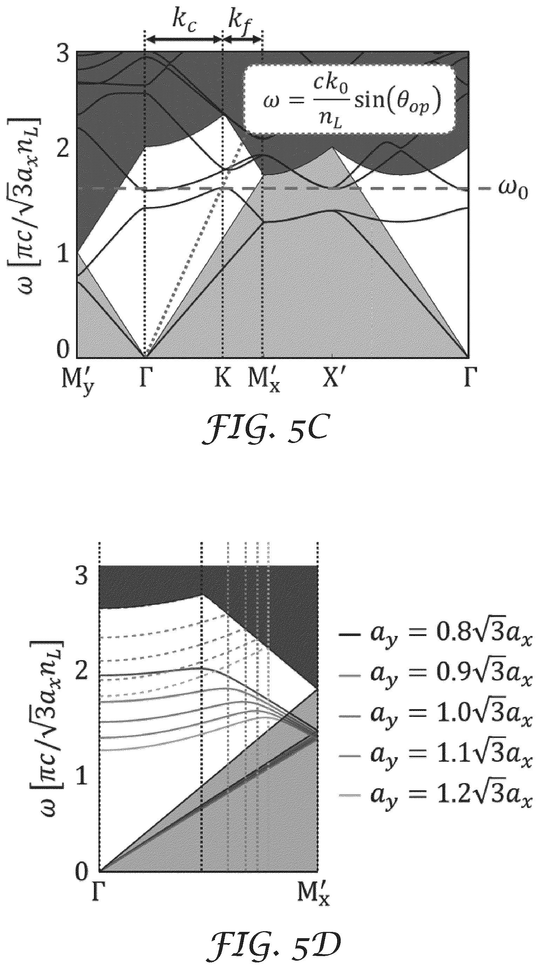

As a result, as shown in the example band diagram of FIG. 5C of such a perturbed device, a flat band is centered at $k_c$ away from the $\Gamma$ point. In this case, the operating angle is such that the light line (shown as dotted line in FIG. 5C centered at $\omega_0$) for incident light,

$$\omega = \frac{ck_0}{n_L}\sin(\theta_{op}),$$

where $k_0 = 2\pi / \lambda$, intersects the flat band at $\omega_0$ (the resonant frequency at $k_c$). For a given lattice, this operating angle evidently is fixed by the resonant frequency. However, the ratio $f = a_y / a_x$ of the lattice constant in the y direction, $a_y$, to that in the x direction $a_x$, can be used as a separate degree of freedom to tune $k_f$. We note that the hexagonal case corresponds to $f = \sqrt{3}$. In particular, we find that the distance $k_f$ in this more general case satisfies

$$k_f = \frac{\pi}{a_x} \frac{2f-1}{f^2},$$

$$k_c = \frac{\pi}{a_x} - k_f = \frac{\pi}{a_x} \frac{(f-1)^2}{f^2}.$$

FIG. 5D shows the band structure along the $\Gamma$-$M'_x$ direction for various choices of $f$, showing broad tunability of $k_f$, and hence, $k_c$. Since $k_f$ becomes smaller as $f$ grows, $k_c = \pi / a_x - k_f = \pi / a_x$ grows. In other words, by stretching the lattice in the y direction by a distance $\delta$, wherein $\delta$ is greater than 0 and less than $a_y/2$, (increasing a dimension in real space), the angle of the flat band mode grows (increasing the dimension in reciprocal space).

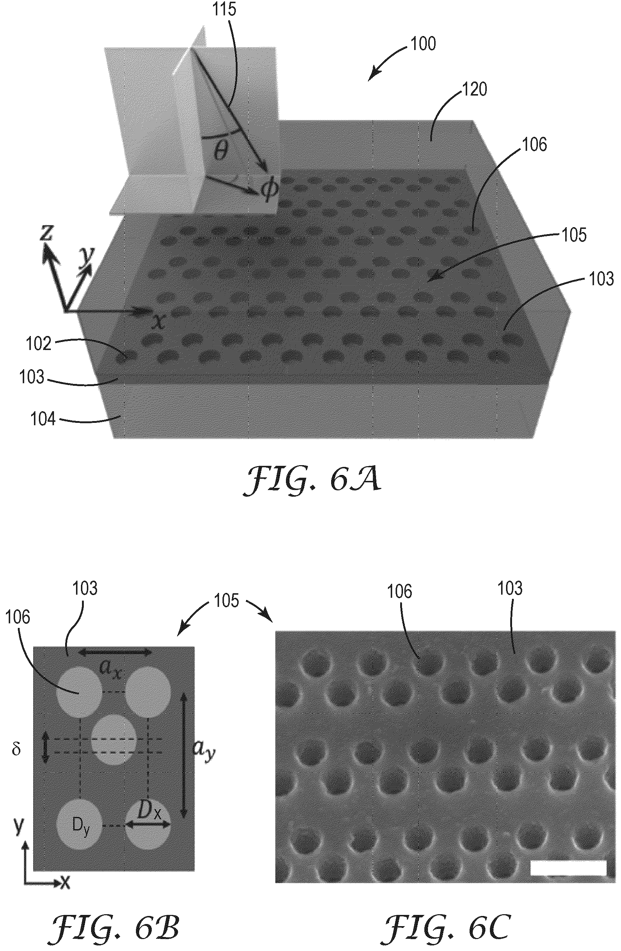

As shown in FIG. 6A, the optical combiner 100 of the present disclosure includes a first structured layer 102 of a material with a first refractive index. The structured layer 102 includes a surface 103 with a periodic arrangement 105 of generally cylindrical depressions 106. A second layer 120 of a material with a second refractive index overlies the surface 103 and at least substantially occupies a volume of each of the depressions 106. The difference between the first refractive index and the second refractive index, measured at 587.5 nm, is less than about 1.5.

The light incident on the structures 106 can be polarized or unpolarized. For example, the input signal 115 incident on the structures 106 can be transverse magnetic (TM) polarized (p-polarized) light, or transverse electric (TE) polarized (s-polarized) light. The input signal 115 is incident on the structures 106 of the first structured layer 102 at an oblique elevation angle $\theta$ of greater than about 20° ($\pm$ 1°), greater than about 30°, greater than about 40°, or greater than about 50°. In some examples, the oblique incident elevation angle $\theta$ is about 40° to about 80°, about 50° to about 70°, about 50° to about 60°, about 55° to about 60°, or about 58°.

In some examples, the input signal 115 can be polarized narrow band signals such as, for example, signals with red, green, and blue (RGB) visible wavelengths. In some examples, the polarized RGB input signal includes a red band with a wavelength of about 620 nm to about 720 nm, a green band with a wavelength of about 500 nm to about 570 nm, and a blue band with a wavelength of about 460 nm to about 500 nm.

In some examples, the distinct narrowband reflection peaks of the output signal of the optical combiner 100 of FIG. 6A can be configured to provide an average reflection of greater than about 50%, or greater than about 70%, or greater than about 80%, or greater than about 90%. The optical combiner 100 provides the average reflection peaks in the output signal within a range of $\pm$ 10°, or $\pm$ 5°, or $\pm$ 3° of a of a selected elevation signal $\theta$. In some examples, the optical combiner 100 can produce the reflection peaks over a wavelength range of about 400 nm to about 700 nm, or about 700 nm to about 2 microns ($\mu$m).

In some examples, the optical combiner 100 can provide the reflection peaks in the output signal over a range of azimuthal angles $\varphi$ (FIG. 6A) of about -5° to about 5°, or about -3° to about 3°.

To provide good optical performance in an application such as a HUD, a suitable optical combiner 100 should provide desired output signal reflection peaks within a desired range of both elevation angles $\theta$ and azimuthal angles $\varphi$. However, since the azimuthal angle $\varphi$ centers around 0°, in some examples the elevational angle $\theta$ can be more sensitive to angular shifts, and as such the discussion of the present disclosure focuses on the elevation angle $\theta$. In the present disclosure, unless a reference to an angle specifically notes that the angle is an azimuthal angle, or an angle $\varphi$, the angle referred to is the elevation angle $\theta$.

In some examples, the optical combiner 100 has a haze of less than about 1% for transmitted light over a wavelength range for unpolarized light over a wavelength range of about 400 nm to about 700 nm incident on the structured surface at any angle incident angle.

In another example, the optical combiner 100 has a reflection of less than about 10% for unpolarized light over a wavelength range of about 400 nm to about 700 nm incident on the structured surface at any incident angle.

In some examples, the first structured layer 102 is a material with a refractive index of less than about 3. In one example, the first structured layer 102 includes, but is not limited to, materials such as titanium dioxide (TiO$_2$), which has a refractive index n = 2.4. Other suitable materials for the first structured layer 102 include zirconia or titania-filled acrylate resins which may be deposited via coating, for example; and metal oxides, nitrides, and oxynitrides including oxides, nitrides, and oxynitrides of Si, Ti, Zr, Hf, Nb, Ta, or Ce, which may be vapor deposited. Since silicon is a metalloid, silicon oxides, silicon nitrides, and silicon oxynitrides are considered to be metal oxides, metal nitrides, and metal oxynitrides, respectively. In some cases, titania (TiO$_2$) may be preferred for optical applications involving visible light.

In some examples, the first structured layer 102 has a thickness of less than about 500 nm, or less than about 200 nm, or less than about 180 nm, or less than about 120 nm.

In some examples, the second layer 120 may be a polymeric material with a refractive index selected to provide a refractive index difference of less than about 1.5. In some examples, the second layer 120 may be a polymeric material with a refractive index selected to provide a refractive index difference of less than about 1.5. Suitable examples include, but are not limited to, poly(methylmethacrylate)(PMMA), polycarbonate (PC), polypropylene (PP), polyethylene (PE), polystyrene (PS), polyester, polyimides, and mixtures and combinations thereof.

In some examples, the second layer 120 overlying the structures 106 on the first structured layer 102 may be a material with a refractive index of less than 3 such as, for example, $TiO_2$, or any of the other materials listed above, and the first structured layer 102 may be a polymeric material with a refractive index selected to provide a refractive index difference of less than about 1.5.

In some embodiments, the first structured layer 102, the second layer 120, or both, may reside on or between one or more optional support layers 104. In some examples, which are not intended to be limiting, the optional support layer 104 may be made of any suitable optical material including glass, polymeric materials such as acrylates, polyethylene terephthalate (PET), polyethylene napthalate (PEN), polymethylmethacrylate (PMMA), cyclic olefin copolymers (COP), polycarbonate (PC), as well as multilayered polymeric optical films. The support layer 104 may include single or multiple layers of the same or dissimilar materials.

The periodic arrangement of structures 105 in the first structured layer 102 may vary widely depending on the intended application of the optical combiner, and the structures 106 may have any shape, size, and spacing capable of separating the input light 115 into selected component wavelengths. In the example of FIG. 6A, the periodic arrangement in the first structured layer 102 includes a lattice 105 of regularly repeating cylindrical depressions 106.

As shown in detail in FIGS. 6B-C, the lattice 105 of depressions 106 includes a hexagonal unit cell arrangement that is perturbed to form a rectangular unit cell. The perturbed lattice of depressions in the surface 103 has a ratio of a lattice constant $a_y$ in a second (y) direction in the plane of an unperturbed lattice of depressions to a lattice constant $a_x$ in the first (x) direction in the plane of the unperturbed lattice of depressions of $r(3)^{1/2}$, wherein the dimensional factor r is from about 0.8 to about 1.2. In some examples, $a_x$ and $a_y$ are less than about 500 nm, or $a_x$ is less than about 300 nm, and $a_y$ is less than about 400 nm. The perturbed lattice 105 includes cylindrical depressions 106 arranged in rows along the first (x) direction in a plane of the surface 103, and wherein every other row of the cylindrical depressions is shifted laterally by a distance $\delta$ of about 1 nm to about 100 nm, or about 50 nm to about 75 nm, in a second (y) direction in the plane of the surface 103.

In some example embodiments, the lateral distance $\delta$ is about 1 nm to about 100 nm, and $a_x$ and $a_y$ are less than about 500 nm, or $\delta$ is about 50 nm to about 75 nm, wherein $a_x$ is less than about 300 nm, and wherein $a_y$ is less than about 400 nm.

In various example embodiments, the cylindrical depressions 106 have a diameter D of less than about 200 nm, or less than 150 nm.

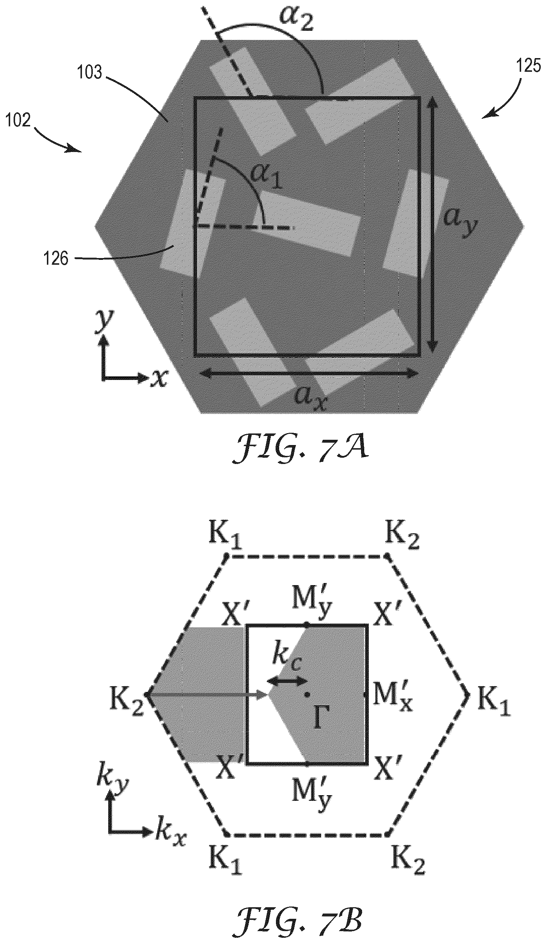

In another embodiment shown in FIGS. 7A-7B, the periodic arrangement in the zone-folded metasurface 103 of the first structured layer 102 of FIG. 6A includes a lattice 125 of regularly repeating rectangular depressions 126. The lattice 125 of depressions 126 includes a hexagonal unit cell arrangement that is perturbed to form a rectangular unit cell, and the perturbed lattice of rectangular depressions in the surface 103 has a lattice constant $a_y$ in a second (y) direction in the plane of an unperturbed lattice of depressions and a lattice constant $a_x$ in the first (x) direction in the plane of the unperturbed lattice of depressions. In some examples, $a_y$ and $a_x$ are each less than about 300 nm, or $a_y = 277$ nm and $a_x = 240$ nm.

In some examples, the rectangular depressions 126 have a length of about 100 nm to 500 nm and a width of about 20 nm to 50 nm, or a length of about 100 nm to 200 nm and a width of about 30 nm to about 50 nm.

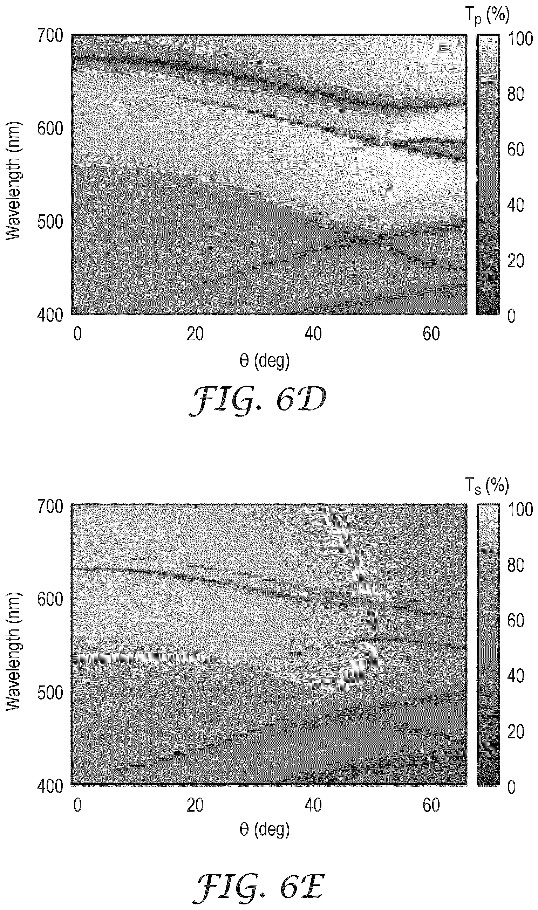

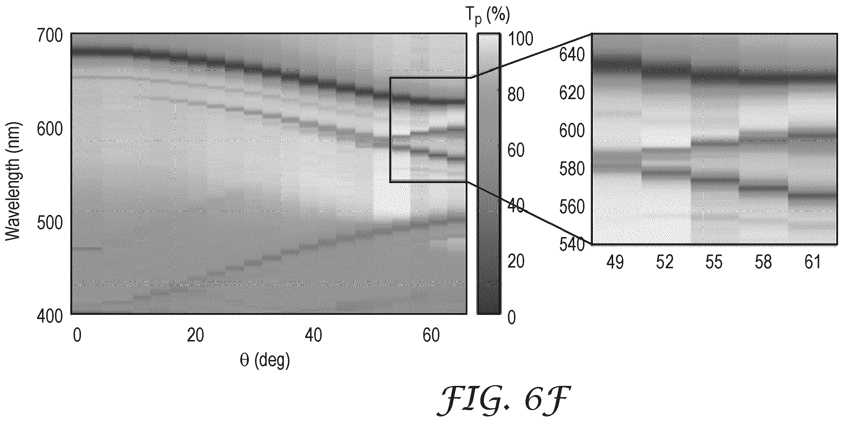

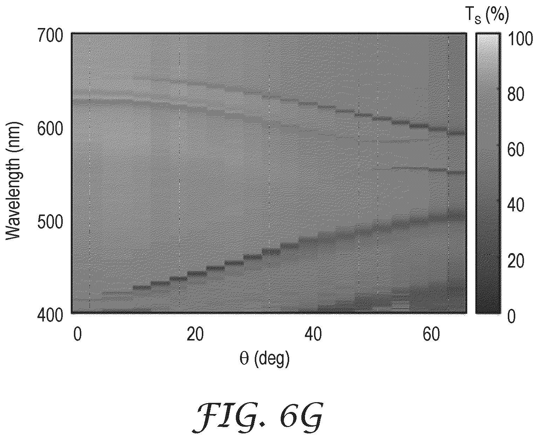

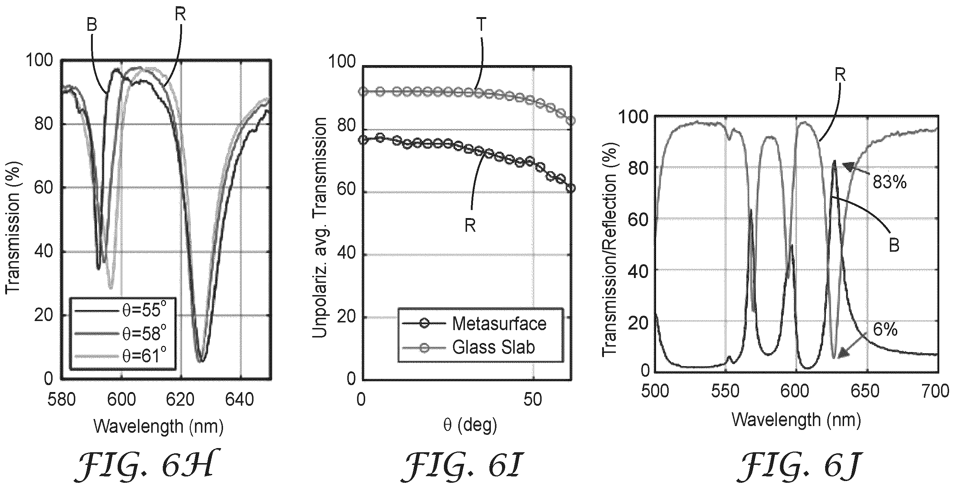

As shown in FIG. 7A, in the lattice 125 every other row is shifted by a distance $\delta = L-W$, wherein L = a length of the rectangular depressions and W = a width of the rectangular depressions, wherein $\delta$ is about 1 nm to about 100 nm, or about 50 nm to about 75 nm. The lattice 125 is now doubled in the x direction compared to the device in FIG. 6, and now incorporates two sets of rectangular depressions 126. In one row, the rectangular depressions 126 are oriented at angles $\alpha_1$ and $\alpha_1 + 90°$, alternating every other depression. In an adjacent row, the depressions 126 slits are oriented at angles $\alpha_2$ and $\alpha_2 + 90°$, wherein $\alpha_1 \neq \alpha_2$. In some examples, $\alpha_1 = 45°$ and $\alpha_2 = 0°$.

The corresponding zone folding is shown in FIG. 7B, showing again that the states are folded from the edge of the unperturbed FBZ to a non-zero quasi-momentum $k_c$ away from the $\Gamma$ point.

In another example, the structured layer includes a cascaded arrangement with a plurality of periodic structures stacked on each other, such that incident light successively interacts with the periodic structures. For example, a first periodic structure in the stack can be configured to support a dual resonance, and a second periodic structure in the stack can be configured to support a single resonance. For example, a first structured surface including a first arrangement of depressions configured to support a dual resonance may be stacked a predetermined distance over a second arrangement of depressions configured to support a single resonance.

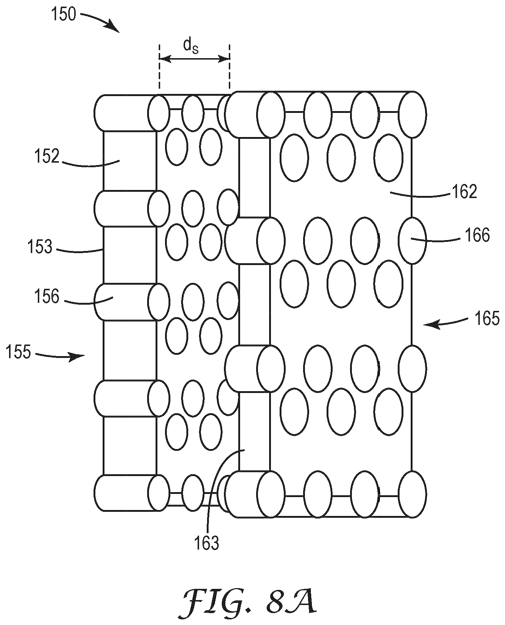

As shown schematically in FIG. 8A, an optical combiner 150 includes a first structured layer 152 with a first surface 153 including an arrangement of periodic structures 155 configured to support a dual resonance such as, for example, green-blue (GB). A second structured layer 162 includes a second surface 163 with a second arrangement of periodic structures 165 configured to support a single resonance such as, for example, red (R).

The structures in the first structured layer 152 and the second structured layer 162 are regularly repeating lattices of cylindrical depressions 156, 166, similar to those shown in FIGS. 6B-C. The lattices 155, 165 include a hexagonal unit cell arrangement that is perturbed to form a rectangular unit cell. The perturbed lattice of depressions in the surfaces 153, 163 have a ratio of a lattice constant $a_y$ in a second (y) direction in the plane of an unperturbed lattice of depressions to a lattice constant $a_x$ in the first (x) direction in the plane of the unperturbed lattice of depressions of $r(3)^{1/2}$, wherein r is from about 0.8 to about 1.2. In some examples, $a_x$ and $a_y$ are less than about 500 nm, or $a_x$ is less than about 300 nm, and $a_y$ is less than about 400 nm.

The perturbed lattices 155, 165 include cylindrical depressions 106 arranged in rows along the first (x) direction in a plane of the surfaces 153, 163, wherein every other row of the cylindrical depressions is shifted laterally by a distance $\delta$ of about 1 nm to about 100 nm, or about 50 nm to about 75 nm, in a second (y) direction in the plane of the surface 103.

In some example embodiments, the lateral distance $\delta$ is about 1 nm to about 100 nm, and $a_x$ and $a_y$ are less than about 500 nm, or $\delta$ is about 50 nm to about 75 nm, wherein $a_x$ is less than about 300 nm, and wherein $a_y$ is less than about 400 nm.

In various example embodiments, the cylindrical depressions 106 have a diameter D of less than about 200 nm, or less than 150 nm.

In one example, which is not intended to be limiting, to form a dual resonance BG filter, the first structured layer 152 included cylindrical depressions 156 arranged in rows such that $a_x$ = 187.5 nm, $a_y$ = 315 nm, $D_x$ = 125 nm, $D_y$ = 155 nm, $\delta$ = 25 nm, and a layer thickness of 208 nm. To form a single resonance R filter, he second structured layer 162 also included cylindrical depressions 166 arranged in rows such that $a_x$ = 250 nm, $a_y$ = 420 nm, $D_x = D_y$ = 180 nm, $\delta$ = 60 nm, and a layer thickness of 100 nm. The layers 152, 162 were positioned a distance $d_s$ of 500 nm apart in an encapsulating layer (not shown in FIG. 8A) such that the encapsulating material substantially occupied the volume of the cylindrical depressions 156, 166. The refractive indices of the first and second structured layers 152, 162 and the encapsulating layer had a refractive index difference of less than about 1.5.

As discussed above with respect to the embodiment of FIGS. 6A-C, the layers 152, 162 may be made of a material with a refractive index of less than about 3 such as, for example, $TiO_2$. The encapsulating layer may be a polymeric material with a refractive index selected to provide a refractive index difference of less than about 1.5 with respect to the refractive index of the layers 152, 162. In some examples, the encapsulating layer 350 may be a dielectric material such as $TiO_2$, and the layers 152, 162 may be made of a polymeric material with a refractive index selected to provide a refractive index difference of less than about 1.5 between the dielectric material and the polymeric material.

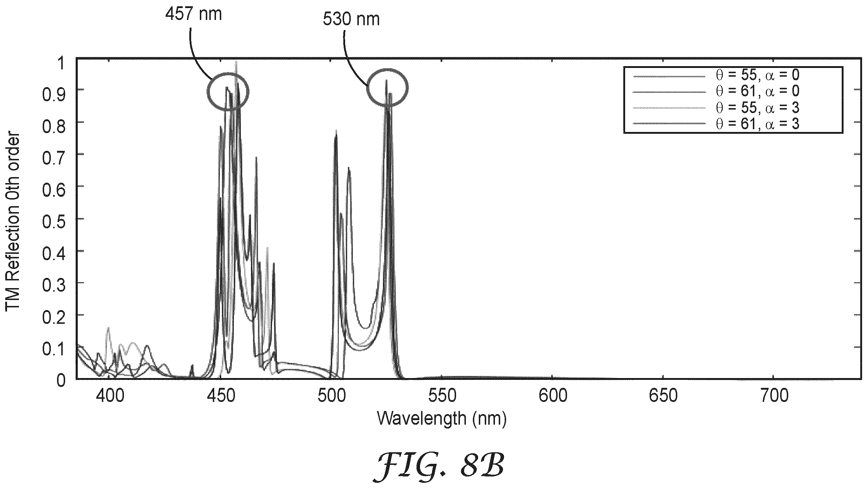

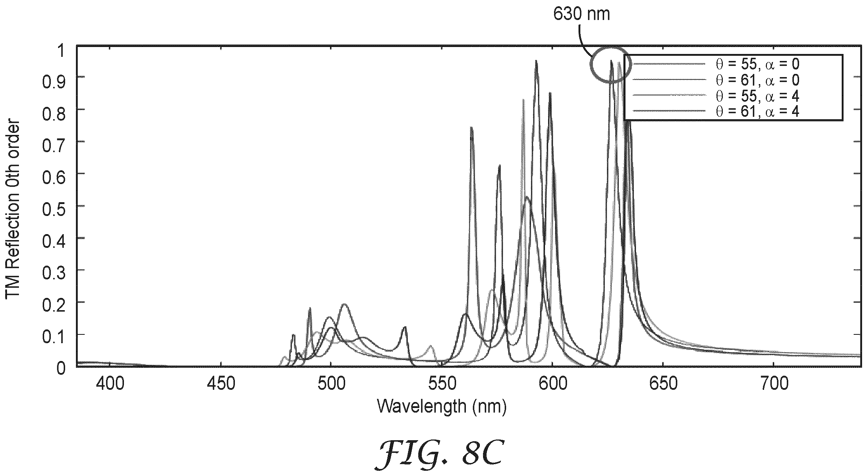

Referring now to the plot of FIG. 8B, the 0th order reflection spectrum over a range of oblique incidence elevation angles $\theta$ = 55-61° is plotted for the first structured layer 152 of FIG. 8A, and shows distinct peaks at 457 nm and 530 nm. FIG. 8C shows the 0th order reflection spectrum over a range of oblique incidence elevation angles $\theta$ = 55-61° plotted for the second structured layer 162 of FIG. 8A, and shows a peak at 630 nm.

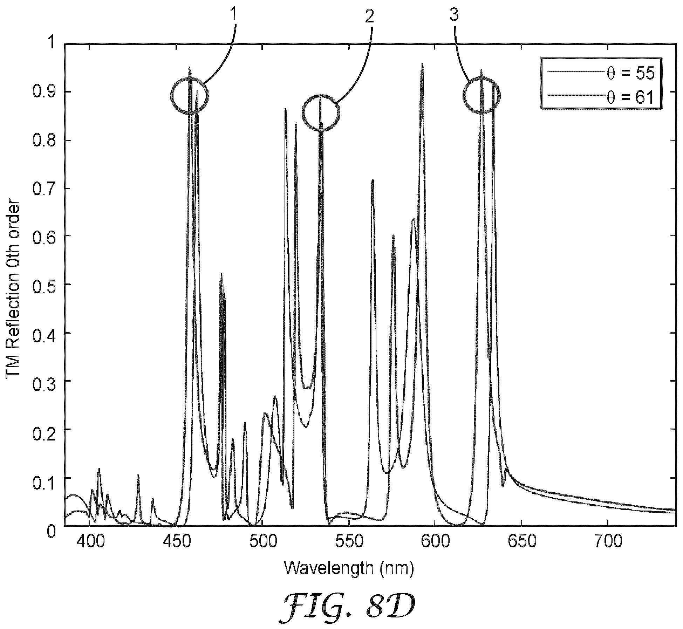

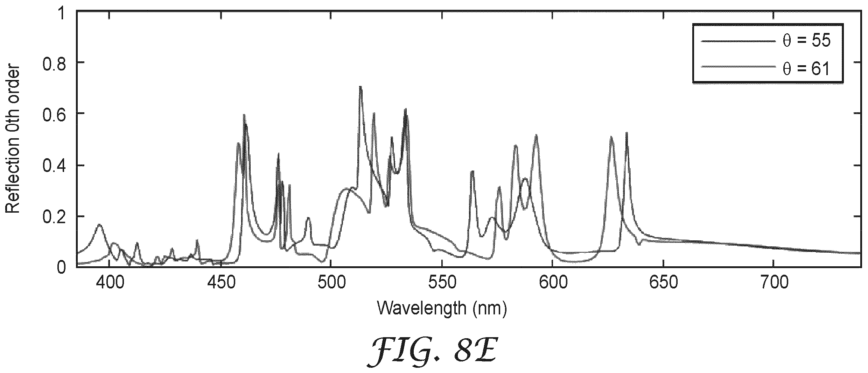

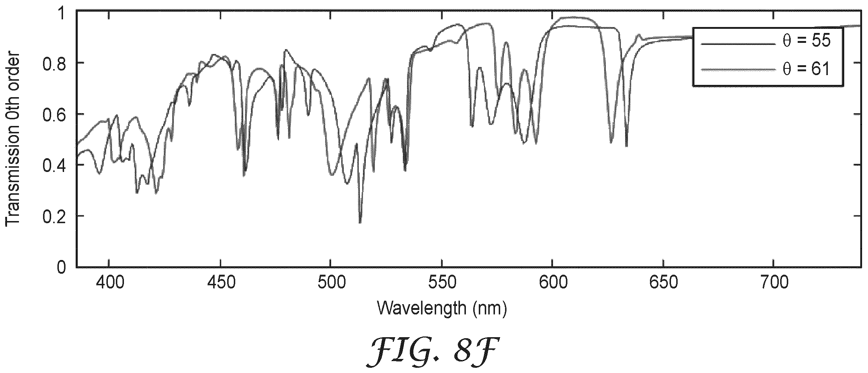

As shown in the plot of the reflectance for TM polarized light at oblique incidence in FIG. 8D, the optical combiner 150 of FIG. 8A including both the structured layers 152, 162 provided an output signal with three resonance peaks. The 0th order reflection and transmission spectra for the optical combiner 150 are shown in FIG. 8E and FIG. 8F, respectively.

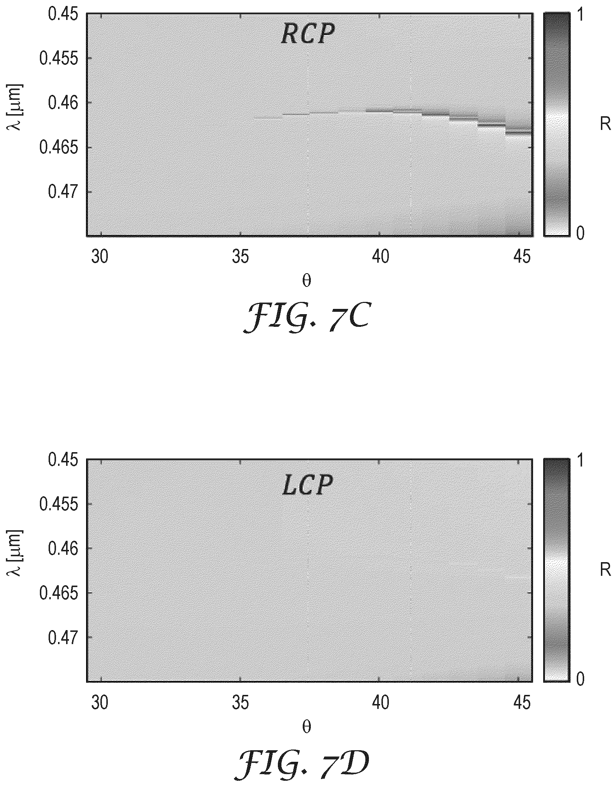

By varying basic parameters of the structures forming the metasurface, such as height and duty cycle, the resonant frequency of the reflective output signal can be tuned. By varying the magnitude of the symmetry-lowering perturbation $\delta$, the linewidth of the resulting resonant state follows $Q \propto 1/\delta^2$. For instance, in the device of FIG. 5-6, $\delta$ is implemented as a lateral shift of a circular hole, while in the device in FIG. 7 it is $\delta$ = L-W. The operating angle of the device is then set by the folded quasi-momentum $k_c$ controlled by the ratio f = $a_y/a_x$ of the unperturbed lattice dimensions. By adding additional degrees of freedom the polarization state may be varied at will, including exhibiting full circular dichroism.

Leveraging the zero first-order dispersion of a band-edge mode is useful in particular for applications requiring narrowband reflection features over a substantial range of incident angles. Since a band-edge mode is born of mode mixing (opening up a band gap) due to the periodicity of a device (breaking continuous translational symmetry), it has well-defined momentum properties determined by the symmetries of the periodic device (discrete translational symmetries). Perturbing a high-symmetry lattice can be used to select the momentum of free-space that couples to this mode. While band-edge modes may exist at arbitrary angles in conventional approaches by engineering the mode mixing of several modes, in the devices of the present disclosure this functionality is achieved in a symmetry-protected manner. That is, for a wide range of parameters there will exist a flat band mode near the desired operating angle, without requiring any precise alignment of several unrelated modes. A maximally Bragg-localized mode (e.g., the K points of a hexagonal lattice) may be accessed at any operating angle for a given refractive index contrast system.

The symmetry-based perturbative approach employed in the present disclosure is also useful with respect to the broadband features: only narrowband features are present in the visible spectral region, leaving the response to the majority of visible light transparent and undistorted. In some examples, in addition to HUD, the optical combiners of the present disclosure may be useful for applications such as AR displays, where high clarity and visibility of the external information is required. The metasurfaces of the present disclosure provide narrow spectral features yielding enhanced reflection over a large angular range, which can be desirable for superimposing the artificial information in a projected AR display. While in most cases transverse magnetic (TM, or p-polarized) light is of particular interest (so that the Brewster's angle may be used to eliminate double images born of reflection off the air-glass interfaces), the nonlocal metasurfaces of the present disclosure may control the polarization state of these zone-folded QBIC structures, offering additional flexibility in optical design.

The enhanced light-matter interactions of these long-lived states make the optical combiners of the present disclosure useful for a wide array of applications. For instance, thermal emission engineering using band-edge QBICs (existing at normal incidence) can be used to produce compact optical sources, and the present approach may augment these concepts by enabling direct engineering of off-normal band-edge modes with distinct polarization states depending on the direction of light. The enhanced light-matter interactions afforded by q-BICs can also be used to produce active devices tuned by electro-optic or thermal methods, wherein the localization of a band-edge mode can make possible more compact devices. Similarly, applications such as biological sensing and nonlinear optics benefit from long-lived states and localization. The optical combiners of the present disclosure may be extended to any linewidth, off-normal operating angle and polarization of choice.

The zone-folded metasurfaces of the present disclosure have symmetry-controlled scalar and vectoral properties. The perturbative approach used to form the metasurfaces introduces narrowband features with on-demand symmetry-controlled linewidths, operating angles, and resonant polarization states. In some examples, the resulting devices offer enhanced reflection of narrowband information with increased angular tolerance over conventional designs, while leaving the majority of the broadband response undistorted and highly transmissive. This combination of features in a periodic structure is uniquely suited as a scalable solution (compatible with roll-to-roll manufacturing) for AR applications.

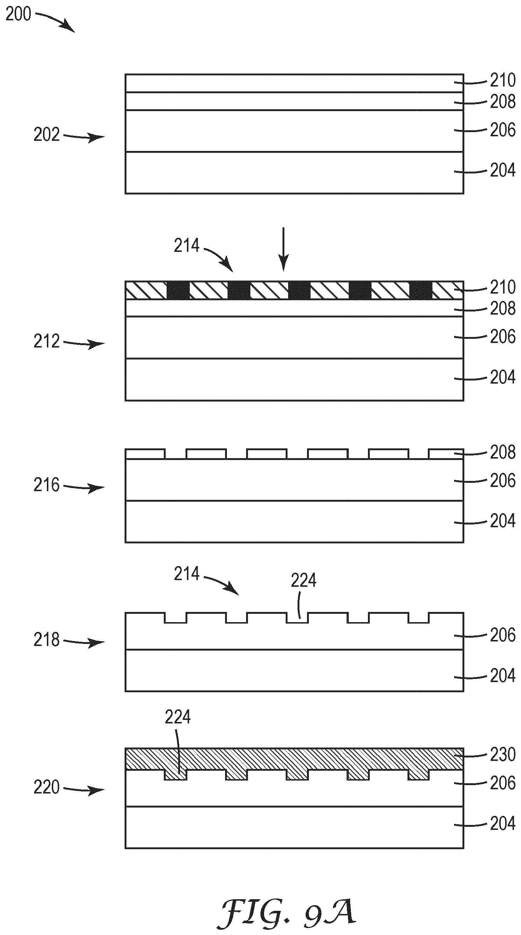

Referring now to the schematic diagram of FIG. 9A, which is not to scale, in another aspect the present disclosure is directed to a method 200 for making the optical combiners shown above. In the method 200, in step 202 a layer of glass 204 with a layer 206 of $TiO_2$ thereon has applied thereon a layer 208 of a metal such as, for example, chromium, by e-beam evaporation. A layer 210 of e-beam resist is spin-coated on the layer of Cr 208.

In step 212, the e-beam resist layer 210 is exposed to e-beam in selected areas to form a pattern 214 suitable for creation of a zone folded metasurface. In step 216, after development, the pattern 214 is transferred to the Cr layer 208 via a dry etching process. In step 216, the pattern 214 is transferred to the $TiO_2$ layer 206 via dry etching to form depressions 224, and the residual portions of the Cr layer 208 are removed via a wet etching process.

As shown in step 220, a polymeric layer 230 is then spin coated onto the $TiO_2$ layer 206, and fills the depressions 224 therein.

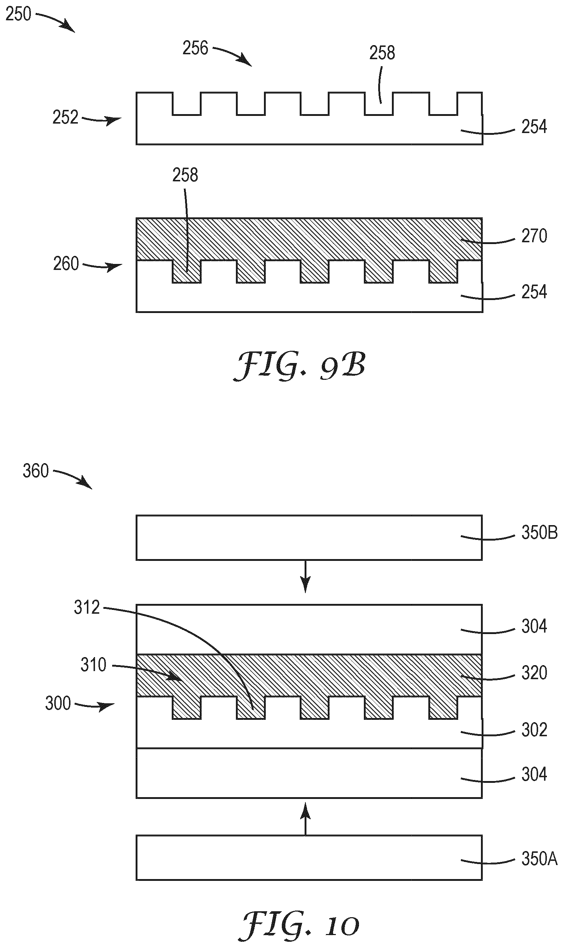

In another embodiment shown in FIG. 9B, a method 250 for making an optical combiner includes a step 252 of providing a structured polymeric film 254 including a pattern 256 of depressions 258 suitable for creation of a zone folded metasurface. The polymeric film 254 may be structured by a wide variety of techniques to form the depressions 258, including etching, laser drilling, microreplication with a metal tool, and combinations thereof.

As shown in step 260, the structured polymeric film 254 may be coated with an encapsulating layer 270 of a dielectric material such as, for example, $TiO_2$, such that the dielectric material occupies the depressions 258.

One or more optional support layers (not shown in FIG. 9B) may be added on the dielectric layer 270 or on the polymeric film 254.

As shown in FIG. 10, in another aspect, the present disclosure is directed to an optical combiner film 300 that includes one or more optional support layers 304, a structured layer 302 with a pattern 310 of depressions 312, and a cover or encapsulating layer 320. In some examples, the combiner film 300 may be manufactured at relatively low cost using a roll-to-roll process, and may easily be made or cut into large formats for use in optical displays, vehicular windshields, and the like.

Referring again to FIG. 10, in some examples, the optical combiner film 300 can be laminated between glass layers 350A, 350B to form a windshield construction 360 for use in a vehicle, aircraft, and the like. In some examples, the optical combiner film 300 can be laminated to either of glass layers 350A, 350B, or may even be laminated to an interior surface of the windshield proximal the vehicle or aircraft operator.

As shown schematically in FIG. 1, the windshield construction 360 may be incorporated into a heads up display (HUD) system for use in vehicles, aircraft, and the like, or may be used as a component of an optical system in an AR device.

The devices of the present disclosure will now be further described in the following nonlimiting examples.

## EXAMPLES

### Example 1

The gratings were fabricated with a standard top-down lithographic process shown schematically in FIGS. 9A.

A layer of $TiO_2$ was deposited on a 1-mm-thick quartz substrate and etched down to desired thickness. A 70-nm-thick layer of chromium was deposited via e-beam evaporation, and a 300-nm-thick layer of e-beam resist (ZEP 520-A, available from Zeon Corp., Marunouchi, JP) was spin-coated on top of the samples. The photonic crystal pattern is written with an electron beam tool (Elionix 100 keV, available from Elionix, Inc., Tokyo, JP). After development, the pattern was transferred to the chromium layer via a $Cl_2$-$O_2$ dry etching process performed in an ICP machine (Oxford PlasmaPro System 100 Cobra, available from Oxford Instruments, Bristol, UK). After removing the ZEP mask, the pattern was further transferred to the titania layer with a CF4-Ar-$O_2$ dry etching process performed in the same ICP machine. The residual chromium mask was then removed via wet etching. To embed the titania metasurface into a glass-like (n=1.5) dielectric environment, a thin layer of polymethylmethacrylate (PMMA) 11 (MicroChem, Newton, MA) was spin-coated on top of the sample. A denser version of the same polymer (PMMA A11, MicroChem) was then drop-cast on top of the sample and used as an adhesion layer to glue a 1-mm-thick microscope coverslip. The fabricated metasurfaces had an in-plane dimensions of about 700 microns to about 1000 microns.

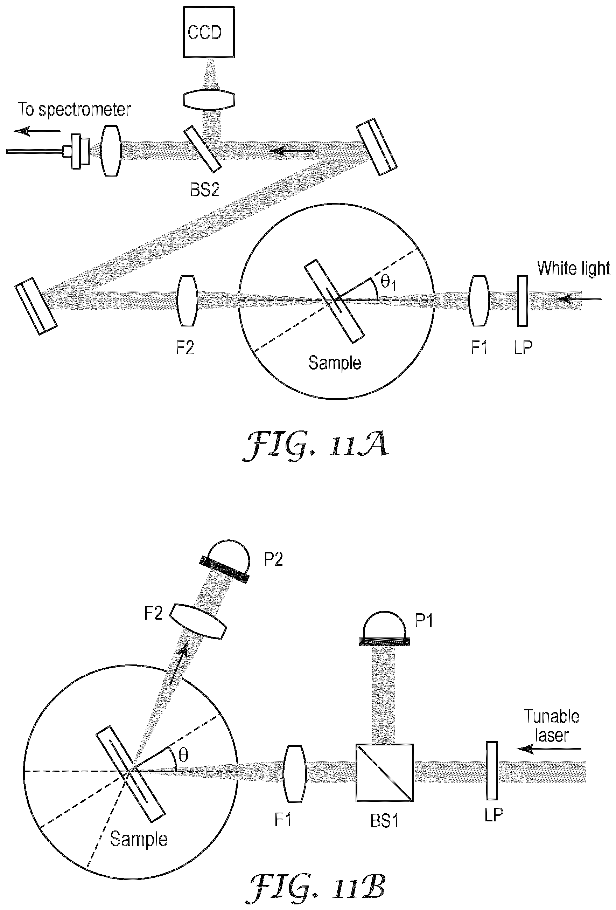

The angle-dependent transmission and reflection spectra were acquired by placing the sample on a motor-controlled rotation stage as shown in FIGS. 11A-B, which allowed accurate control of the angle θ. For transmission measurements (FIG. 11A), a broadband white light was linearly polarized and weakly focused on the sample (focal length f=10 cm) to obtain an excitation spot with a diameter of about 300 μm. This excitation configuration was chosen as a compromise to ensure that the beam spot was smaller than the grating cross section even for large angles θ, while simultaneously minimizing the excitation angular spread.

The beam was collected from the other side of the sample with an identical lens and directed either to a CCD camera (for alignment purposes) or to a fiber coupled spectrometer. For each angle the lamp spectra transmitted through the grating, $S_{grat}(\lambda, \theta)$ was acquired, and through the bare glass-like substrate, $S_0(\lambda, \theta)$, and the transmission spectra $T(\lambda, \theta) \equiv \frac{S_{grat}(\lambda,\theta)}{S_0(\lambda,\theta)}$ was calculated. This procedure properly considers the lateral beam shifts introduced by the thick glass substrate at large angles, which can alter the collection efficiency. Due to the normalization used, $T(\lambda, \theta)$ does not include the effect of the air/glass and glass/air interfaces. To correct for this, the angle-dependent incoherent transmission spectrum was calculated through a thick glass slab, $T_{glass}(\lambda, \theta)$, which was used to calculate the absolute transmission of the sample, $T_{abs}(\lambda, \theta) \equiv T(\lambda, \theta) \times T_{glass}(\lambda, \theta)$.

For reflection measurements (FIG. 11B), a linearly polarized tunable laser (SuperK Fianium, available from NKT Photonics, Boston, MA) was used as a source. Before being focused on the sample, a portion of the laser was extracted with a beam splitter and directed to a power meter (P1) for power calibration. The beam reflected by the grating was collimated by a lens and measured by a second power meter (P2). Both collecting lens and power meter P2 were placed on a second rotation stage, whose angle is set to 180° - 2θ to measure the specular reflection. The absolute reflection spectra were then obtained by sweeping the excitation wavelength and recording the powers measured by P1 and P2.

The device of FIGS. 6A-C above, which included $a_x$ = 231 nm, $a_y$ = 386 nm, D = 143 nm, and δ = 66 nm), the p-polarized transmission spectra (FIG. 6D for the simulated response and FIG. 6F for the measured response) showed the expected feature: the upper band (i.e., the longest wavelength mode) was flattened at an incident angle θ of about 58°, due to the avoided crossing between this and a lower band (see also right inset of FIG. 6D for a zoom-in). As a result, the transmission dip associated with this band (at λ of about 627 nm) was almost dispersion-less in the angular range of interest (θ = 58° ± 3°), as also shown in FIG. 6H.

The s-polarized transmission spectra (FIG. 6E for the simulated response and FIG. 6G for the measured response) showed similar features, with different bands (typically narrower than the p-polarization case) and the presence of an avoided crossing, although at a different angle. While not wishing to be bound by any theory, the difference in the absolute values of the transmission between simulations and measurements, especially visible for s-polarization (FIG. 6E, G) at large angles, was likely due to the fact that in simulations the presence of the two air/glass interfaces is neglected. As expected, for s-polarized excitation the measured transmission decreased at large angles because of the large reflection at the two glass/air interfaces. For p-polarized excitation this effect was less important because at the Brewster angle (θ = about 58°) the reflection at the air/glass interfaces is zero.

As mentioned above, an important figure of merit to ensure that these devices can be used for augmented reality (AR) applications is that, apart from the wavelengths of operation, they are mainly transmissive for an unpolarized broadband signal in the visible range. To quantify this, the average between the two datasets in FIGS 6F-G (to emulate an unpolarized beam) was calculated, and further averaged across the wavelengths in the visible range. The obtained curve (FIG. 6I, curve B) shows that the average unpolarized transmission was almost 80% at normal incidence, while it dropped to about 60% at the elevation angle of operation θ = 58°. The slow decrease of the average transmission as θ increases was mainly due to the reduced transmission of the TE component. For comparison, the curve R in FIG. 6I shows the average unpolarized transmission of a thick glass slab.

To confirm that the transmission dips are due to large reflection, and to quantify the loss, reflection spectra were measured at select angles using the techniques described above in the discussion of FIGS. 11A-B. In FIG. 6J the reflection spectra at θ = 58° (line B) are compared with the transmission spectra (line R) at the same angle. The three transmission dips in the 500 - 700 nm range are accompanied by corresponding reflection peaks, with almost equal magnitude. Again, while not wishing to be bound by any theory, the small discrepancy between the central wavelengths of the transmission dips and reflection peaks is believed to be due to a small spectral detuning between the different tools used for reflection and transmission measurements. For the peak of interest ($\lambda$ = about 627 nm) a transmission dip of 6% is accompanied by a reflection peak of 83%, indicating the presence of on-resonance ~11% loss. In some examples, this loss can likely be attributed to fabrication imperfections (i.e. roughness), and to residuals of the metallic mask used for fabrication.

**Example 2**

In another example, the device of FIGS. 7A-B was prepared, with four rectangular apertures of dimension $45 \times 110 nm$ rotated at angles $\alpha_1, \alpha_1 + 90°, \alpha_2, \alpha_2 + 90°$. The slab had height H = 180 nm and the lattice constants were $a_x$ = 240 nm and $a_y$ = 277 nm.

The expected eigenpolarization was as follows:

$$|e\rangle \propto c_1 \begin{bmatrix} \cos(2\alpha_1) \\ \sin(2\alpha_1) \end{bmatrix} + ik_x c_2 \begin{bmatrix} \cos(2\alpha_2) \\ \sin(2\alpha_2) \end{bmatrix},$$

where $c_1$, $c_2$ depend on how the dimensions of the rectangular, $W \times L$, differ from a square (i.e., $c_1 \propto L_1 - W_1$ and $c_2 \propto L_2 - W_2$). The factor $i = (-1)^{1/2}$ comes from the quarter period shift of the two rows in the $x$ direction, and $k_x$ is the in-plane momentum and hence is positive when light is incident with lateral momentum pointing in the +$x$ direction and - when pointing in the -$x$ direction. A linear eigenpolarization $\phi_{eig} \approx \alpha_1$ was expected when $\alpha_1 = \alpha_2$, similar to the response of the device in Figs. 2-3. However, in this case elliptical dichroism may be observed when $\alpha_1 \neq \alpha_2$.

FIGS. 7C-D show the reflectance in the blue region for RCP and LCP light, respectively, for a device with $\alpha_1$ = 45° and $\alpha_2$ = 0°.

**Claims**

1. An optical combiner (100; 150), comprising:

a first layer (102; 152) comprising a periodic two-dimensional arrangement (105; 125; 155) of structures arranged to support resonance for an input signal (115) of a target wavelength, wherein the structures have a first refractive index;

a second layer (120) that overlies the structures on the first layer, wherein the second layer comprises a second material with a second refractive index, and wherein a difference between the first refractive index and the second refractive index, measured at 587.5 nm, is less than 1.5;

and

wherein the periodic arrangement of structures is configured such that the optical combiner produces, for the input signal incident on the first layer from air at an oblique elevation angle of greater than 20°, an output signal comprising a reflection peak with an average reflection of greater than 50% within a $\pm$ 5° range of the elevation angle.

wherein the periodic two-dimensional arrangement of structures comprises a lattice of regularly repeating depressions (106; 126; 156), wherein the lattice of depressions has a perturbed hexagonal unit cell, said perturbed hexagonal unit cell being a hexagonal unit cell arrangement that is perturbed so that the perturbed lattice of depressions has a rectangular unit cell, and

wherein the second material occupies at least a portion of a volume of each depression.

2. The optical combiner (100; 150) of claim 1, wherein the elevation angle is greater than 20° and up to 70°.

3. The optical combiner (100; 150) of claim 1 or 2, wherein the input signal (115) is transverse magnetic, TM or p-polarized, polarized.

4. The optical combiner (100; 150) of any one of claims 1 to 3, wherein the input signal (115) comprises red, blue and green, RGB, wavelengths of visible light.

5. The optical combiner (100; 150) of any one of claims 1 to 4, wherein the output signal comprises the reflection peaks over a wavelength range of 400 nm to 2 microns.

6. The optical combiner (100; 150) of any one of claims 1 to 5, wherein the optical combiner produces the output signal over an azimuthal angular range of -5° to 5° in a plane normal to a plane of incidence of the input signal.

7. The optical combiner (100; 150) of claim 1, wherein the perturbed lattice (105; 155) of depressions comprises cylindrical depressions (106, 156) arranged in rows along a first direction in a plane of the first layer (102; 152), and wherein every other row of the cylindrical depressions is shifted laterally by a distance $\delta$ in a second direction in the plane of the first layer and normal to the first direction.

8. The optical combiner (100; 150) of claim 1, wherein the perturbed lattice (105; 125; 155) of depressions having said rectangular unit cell has a first lattice constant $a_x$ in a first x-direction in a plane of a surface (103) of the first layer (102; 152) including said perturbed lattice of depressions and a second lattice constant $a_y$ in a second y-direction in the plane of said surface and wherein a ratio of said second lattice constant $a_y$ to said first lattice constant $a_x$ is $r(3)^{1/2}$, where r is from 0.8 to 1.2.

9. The optical combiner (100) of claim 1, wherein the perturbed lattice (125) of depressions comprises rectangular depressions (126) extending into a plane of the first layer (102) and arranged in pairs of rows along a first direction in the plane of the first layer, and wherein every other row is shifted by a distance $\delta$ = L-W, wherein L = a length of the rectangular depressions and W = a width of the rectangular depressions.

10. The optical combiner (100) of claim 9, and wherein alternating rectangular depressions (126) in a first row of the pairs of rows are oriented at angles $\alpha_1$ and $\alpha_1$ + 90°, and alternating rectangular depressions in a second row of the pairs of rows adjacent to the first row are oriented at angles $\alpha_2$ and $\alpha_2$ + 90°, wherein $\alpha_1 \neq \alpha_2$.

11. The optical combiner (100) of any one of claims 1 to 10, wherein either the first layer (102: 152) comprises $TiO_2$, and the second layer (120) comprises a polymeric material with a refractive index of 1.2 to 1.55, or the first layer comprises a polymeric material with a refractive index of 1.2 to 1.55, and the second layer comprises $TiO_2$.

**Patentansprüche**

1. Optischer Kombinator (100; 150), umfassend:

   eine erste Schicht (102; 152), die eine periodische zweidimensionale Anordnung (105; 125; 155) von Strukturen umfasst, die dazu angeordnet sind, Resonanz für ein Eingangssignal (115) einer Zielwellenlänge zu unterstützen, wobei die Strukturen einen ersten Brechungsindex aufweisen;
   eine zweite Schicht (120), die über den Strukturen auf der ersten Schicht liegt, wobei die zweite Schicht ein zweites Material mit einem zweiten Brechungsindex umfasst und wobei eine Differenz zwischen dem ersten Brechungsindex und dem zweiten Brechungsindex, gemessen bei 587,5 nm, kleiner als 1,5 ist; und
   wobei die periodische Anordnung von Strukturen derart eingerichtet ist, dass der optische Kombinator für das Eingangssignal, das aus der Luft mit einem schrägen Elevationswinkel von mehr als 20° auf die erste Schicht einfällt, ein Ausgangssignal erzeugt, das einen Reflexionspeak mit einer durchschnittlichen Reflexion von mehr als 50% innerhalb eines $\pm$ 5°-

Bereichs des Elevationswinkels umfasst. wobei die periodische zweidimensionale Anordnung von Strukturen ein Gitter von sich regelmäßig wiederholenden Vertiefungen (106; 126; 156) umfasst, wobei das Gitter von Vertiefungen eine gestörte hexagonale Einheitszelle aufweist, wobei die gestörte hexagonale Einheitszelle eine hexagonale Einheitszellenanordnung ist, die derart gestört ist, dass das gestörte Gitter von Vertiefungen eine rechteckige Einheitszelle aufweist, und wobei das zweite Material mindestens einen Teil eines Volumens jeder Vertiefung einnimmt.

2. Optischer Kombinator (100; 150) nach Anspruch 1, wobei der Elevationswinkel größer als 20° und bis zu 70° ist.

3. Optischer Kombinator (100; 150) nach Anspruch 1 oder 2, wobei das Eingangssignal (115) transversal magnetisch, TM- oder p-polarisiert, polarisiert ist.

4. Optischer Kombinator (100; 150) nach einem der Ansprüche 1 bis 3, wobei das Eingangssignal (115) rote, blaue und grüne, RGB, Wellenlängen von sichtbarem Licht umfasst.

5. Optischer Kombinator (100; 150) nach einem der Ansprüche 1 bis 4, wobei das Ausgangssignal die Reflexionspeaks über einen Wellenlängenbereich von 400 nm bis 2 Mikrometer umfasst.

6. Optischer Kombinator (100; 150) nach einem der Ansprüche 1 bis 5, wobei der optische Kombinator das Ausgangssignal über einen azimutalen Winkelbereich von -5° bis 5° in einer Ebene senkrecht zu einer Einfallsebene des Eingangssignals erzeugt.

7. Optischer Kombinator (100; 150) nach Anspruch 1, wobei das gestörte Gitter (105; 155) von Vertiefungen zylindrische Vertiefungen (106, 156) umfasst, die in Reihen entlang einer ersten Richtung in einer Ebene der ersten Schicht (102; 152) angeordnet sind, und wobei jede zweite Reihe der zylindrischen Vertiefungen seitlich um einen Abstand 8 in einer zweiten Richtung in der Ebene der ersten Schicht und senkrecht zu der ersten Richtung verschoben ist.

8. Optischer Kombinator (100; 150) nach Anspruch 1, wobei das gestörte Gitter (105; 125; 155) von Vertiefungen, das die rechteckige Einheitszelle aufweist, eine erste Gitterkonstante $a_x$ in einer ersten x-Richtung in einer Ebene einer Oberfläche (103) der ersten Schicht (102; 152), die das gestörte Gitters von Vertiefungen aufweist, und eine zweite Gitterkonstante $a_y$ in einer zweiten y-Richtung in der Ebene der Oberfläche aufweist, und wobei ein Verhältnis der zweiten Gitterkonstante $a_y$ zu der ersten Gitterkonstantenachse $a_x$ r(3)$^{1/2}$ ist, wobei r von 0,8 bis 1,2 ist.

9. Optischer Kombinator (100) nach Anspruch 1, wobei das gestörte Gitter (125) von Vertiefungen rechteckige Vertiefungen (126) umfasst, die sich in eine Ebene der ersten Schicht (102) erstrecken und in Paaren von Reihen entlang einer ersten Richtung in der Ebene der ersten Schicht angeordnet sind, und wobei jede zweite Reihe um einen Abstand δ = L-W verschoben ist, wobei L eine Länge der rechteckigen Vertiefungen und W eine Breite der rechteckigen Vertiefungen ist.

10. Optischer Kombinator (100) nach Anspruch 9, und wobei alternierende rechteckige Vertiefungen (126) in einer ersten Reihe der Paare von Reihen in Winkeln $\alpha_1$ und $\alpha_1$ + 90° ausgerichtet sind und alternierende rechteckige Vertiefungen in einer zweiten Reihe der Paare von Reihen benachbart zu der ersten Reihe in Winkeln $\alpha_2$ und $\alpha_2$ + 90° ausgerichtet sind, wobei $a_1 \neq a_2$.

11. Optischer Kombinator (100) nach einem der Ansprüche 1 bis 10, wobei entweder die erste Schicht (102; 152) TiO$_2$ umfasst und die zweite Schicht (120) ein Polymermaterial mit einem Brechungsindex von 1,2 bis 1,55 umfasst oder die erste Schicht ein Polymermaterial mit einem Brechungsindex von 1,2 bis 1,55 umfasst und die zweite Schicht TiO$_2$ umfasst.

**Revendications**

1. Combinateur optique (100 ; 150), comprenant :

une première couche (102 ; 152) comprenant un agencement périodique bidimensionnel (105 ; 125 ; 155) de structures agencées pour prendre en charge la résonance d'un signal d'entrée (115) d'une longueur d'onde cible, dans lequel les structures ont un premier indice de réfraction ;
une seconde couche (120) qui recouvre les structures de la première couche, dans lequel la seconde couche comprend un second matériau avec un second indice de réfraction, et dans lequel une différence entre le premier indice de réfraction et le second indice de réfraction, mesurée à 587,5 nm, est inférieure à 1,5 ; et
dans lequel l'agencement périodique de structures est configuré de manière à ce que le combinateur optique produise, pour le signal d'entrée incident sur la première couche depuis l'air à un angle d'élévation oblique supérieur à 20°, un signal de sortie comprenant un pic de réflexion avec une réflexion moyenne supérieure à 50 % dans une plage de ± 5° de l'angle d'élévation.
dans lequel l'agencement périodique bidimensionnel de structures comprend un réseau de dépressions répétées régulièrement (106 ; 126 ; 156), dans lequel le réseau de dépressions a une cellule unitaire hexagonale perturbée, ladite cellule unitaire hexagonale perturbée étant un agencement de cellule unitaire hexagonale qui est perturbé de sorte que le réseau perturbé de dépressions a une cellule unitaire rectangulaire, et
dans lequel le second matériau occupe au moins une partie d'un volume de chaque dépression.

2. Combinateur optique (100 ; 150) selon la revendication 1, dans lequel l'angle d'élévation est supérieur à 20° et inférieur ou égal à 70°.

3. Combinateur optique (100 ; 150) selon la revendication 1 ou 2, dans lequel le signal d'entrée (115) est magnétique transversal, polarisé TM, ou polarisé en p.

4. Combinateur optique (100 ; 150) selon l'une quelconque des revendications 1 à 3, dans lequel le signal d'entrée (115) comprend des longueurs d'onde de lumière visible rouge, bleue et verte, RVB.

5. Combinateur optique (100 ; 150) selon l'une quelconque des revendications 1 à 4, dans lequel le signal de sortie comprend les pics de réflexion sur une plage de longueur d'onde de 400 nm à 2 microns.

6. Combinateur optique (100 ; 150) selon l'une quelconque des revendications 1 à 5, dans lequel le combinateur optique produit le signal de sortie sur une plage angulaire azimutale de -5° à 5° dans un plan normal à un plan d'incidence du signal d'entrée.

7. Combinateur optique (100 ; 150) selon la revendication 1, dans lequel le réseau perturbé (105 ; 155) de dépressions comprend des dépressions cylindriques (106, 156) agencées en rangées le long d'une première direction dans un plan de la première couche (102 ; 152), et dans lequel une rangée sur deux des dépressions cylindriques est décalée latéralement d'une distance δ dans une seconde direction dans le plan de la première couche et normale à la première direction.

8. Combinateur optique (100 ; 150) selon la revendication 1, dans lequel le réseau perturbé (105 ; 125 ; 155) de dépressions ayant ladite cellule unitaire rectangulaire a une première constante de réseau $a_x$ dans une première direction x dans un plan d'une surface (103) de la première couche (102 ; 152) comportant ledit réseau perturbé de dépressions et une seconde constante de réseau $a_y$ dans une seconde direction y dans le plan de ladite surface et dans lequel un rapport entre ladite seconde constante de réseau $a_y$ et ledit premier axe de constante de réseau $a_x$ est $r(3)^{1/2}$, où r est compris entre 0,8 et 1,2.

9. Combinateur optique (100) selon la revendication 1, dans lequel le réseau perturbé (125) de dépressions comprend des dépressions rectangulaires (126) s'étendant dans un plan de la première couche (102) et agencées en paires de rangées le long d'une première direction dans le plan de la première couche, et dans lequel une rangée sur deux est décalée d'une distance $\delta = L-W$, où L = une longueur des dépressions rectangulaires et W = une largeur des dépressions rectangulaires.

10. Combinateur optique (100) selon la revendication 9, et dans lequel des dépressions rectangulaires alternées (126) dans une première rangée des paires de rangées sont orientées à des angles $\alpha_1$ et $\alpha_1 + 90°$, et des dépressions rectangulaires alternées dans une seconde rangée des paires de rangées adjacente à la première rangée sont orientées à des angles $\alpha_2$ et $\alpha_2 + 90°$, où $a_1 \neq a_2$.

11. Combinateur optique (100) selon l'une quelconque des revendications 1 à 10, dans lequel la première couche (102 ; 152) comprend du $TiO_2$, et la seconde couche (120) comprend un matériau polymère ayant un indice de réfraction de 1,2 à 1,55, ou la première couche comprend un matériau polymère ayant un indice de réfraction de 1,2 à 1,55, et la seconde couche comprend du $TiO_2$.

*FIG. 1*

*FIG. 2*

*FIG. 3*

FIG. 4A

FIG. 4B

FIG. 4C

FIG. 4D

FIG. 5A

FIG. 5B

$$\omega = \frac{ck_0}{n_L}\sin(\theta_{op})$$

FIG. 5C

FIG. 5D

FIG. 6A

FIG. 6B

FIG. 6C

*FIG. 6D*

*FIG. 6E*

FIG. 6F

EP 4 206 790 B1

FIG. 6G

FIG. 6J

FIG. 6I

FIG. 6H

FIG. 7A

FIG. 7B

FIG. 7C

FIG. 7D

FIG. 8A

*FIG. 8B*

EP 4 206 790 B1

EP 4 206 790 B1

FIG. 8C

FIG. 8D

FIG. 8E

*FIG. 8F*

FIG. 9A

250

256          258

252          254

258

270

260          254

## FIG. 9B

360

350B

312

304

310          320

300          302

304

350A

## FIG. 10

*FIG. 11A*

*FIG. 11B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021036525 A1